# EUROPÄISCHE PATENTSCHRIFT

(11) **EP 4 132 270 B1**
(45) Veröffentlichungstag und Bekanntmachung des Hinweises auf die Patenterteilung: **30.09.2026**
(21) Anmeldenummer: 21718539.6
(22) Anmeldetag: 08.04.2021
(51) Int. Cl.: A01M 17/00, A01M 1/20, G01K 1/024

(54) **HEISS-ENTWESUNG**
DISINFESTATION BY HEAT
DÉINFESTATION PAR CHAUFFAGE

(30) Priorität: 09.04.2020 DE 102020204640
(43) Veröffentlichungstag der Anmeldung: 15.02.2023
(73) Patentinhaber: H8 GmbH, 80337 München (DE)
(72) Erfinder: HÖHNE, Jens, 80337 München (DE)
(74) Vertreter: Winter, Brandl - Partnerschaft mbB
(86) Internationale Anmeldenummer: PCT/EP2021/059178
(87) Internationale Veröffentlichungsnummer: WO 2021/204944

(56) Entgegenhaltungen:
- US-A1- 2005 246 942
- US-A1- 2007 084 105
- US-A1- 2010 071 258
- US-B1- 6 327 812
- KATRIN MEIER: "Binker Materialschutz GmbH - Wärmeentwesung", 17 July 2015 (2015-07-17) - 26 August 2025 (2025-08-26), XP093308074, Retrieved from the Internet <URL:https://web.archive.org/web/20150717163150/http://www.binker.eu:80/bekaempfungsmethoden/physikalische-verfahren/waermeentwesung.html> [retrieved on 20250826]

## Beschreibung

### Technisches Gebiet

Die vorliegende Offenbarung betrifft ein Verfahren zur Heiß-Entwesung von lebensmitteltechnischen Anlagen und Geräten nach Anspruch 1 oder 2 sowie eine Anordnung zur Durchführung dieses Verfahrens nach Anspruch 10.

Zur Entwesung von lebensmitteltechnischen Anlagen und Geräten, z.B. Getreidemühlen, wird neben chemischen Methoden (US 2014/0013653 A1) die sogenannte Heiß-Entwesung angewandt. Hierbei wird mit Heizgeräten (bekannt auch aus der Bauindustrie oder z.B. Erwärmung von Zelten) der gesamte Raum inklusive der in dem Raum befindlichen zu entwesenden Geräte und Anlagen auf ein Temperaturfenster mit einer minimalen und einer maximalen Temperatur um ca. 60 Grad Celsius aufgewärmt (wärmer schädigt die in Zweifel die Geräte). Der derzeitige Marktführer Thermonox (www.thermonox.de) setzt dafür eigens entwickelte Heizgeräte ein. Viel wichtiger scheint im praktischen Einsatz jedoch zu sein, dass man nicht nur die Temperatur der Luft des Heizgerätes kennt, sondern auch die Temperaturen der einzelnen zu entwesenden Geräten. Diese Temperatur wird derzeit mit IR-Pistolen in regelmäßigen Abständen gemessen. Dazu muss u.a. ein Mitarbeiter die zu entwesenden Räume in Regelmäßigen Abständen betreten und die Temperaturen notieren. Dieses Verfahren ist zeitaufwendig und personalintensiv und damit teuer. Zudem bedingt das manuelle Ablesen bei hohen Temperaturen eine hohe Fehleranfälligkeit mit sich.

Die Firma Remko stellt mobile Heizgeräte her, die über kabelgebunden Thermostaten gesteuert werden können (https:/Iwww.remko.de/mobile-warmluftheizsysteme/serie-dzh/#c1749).

Aus der US 2005/0246942 A1 ist ein mobiles System zum thermischen Abtöten von Schädlingen in abgeschlossenen Bereichen bekannt. Hierbei können Funkthermometer eingesetzt werden, deren Position vorab oder während der Entwesung festgelegt wird. Von den Funkthermometern wird lediglich die Temperatur an eine Zentrale übermittelt. Diese Temperaturen werden in einer Grundrißkarte der zu entwesenden Räume mit der Lage des jeweiligen Thermometers angezeigt. Die Bildung Datensätzen mit Temperatur, Messzeitpunkt und Kennung und Position der Funkthermometer ist nicht offenbart.

Auch aus der US 2007/0084105 A1 und der US 6 327 812 B1 sind mobile Systeme zum thermischen Abtöten von Schädlingen in abgeschlossenen Bereichen bekannt. Hierzu werden Funkthermometer eingesetzt, die an vorab festgelegten Positionen platziert werden und die in Echtzeit die gemessene Temperatur an eine Steuerung übermitteln. Das bilden von Datensätzen bestehend aus gemessener Temperatur, Messzeitpunkt, Position und Kennung des jeweiligen Funkthermometers ist nicht bekannt. Auch berücksichtigt dieses Systeme eine Schädigung der zu entwesenden Strukturen durch überhöhte Temperaturen nicht.

Aus der US 2010/071258 A1 ist ein mobiles System zum thermischen Abtöten von Schädlingen in abgeschlossenen Bereichen bekannt. Auch bei diesem System werden Funkthermometer eingesetzt, die an vorab festgelegten Positionen platziert werden und die in Echtzeit die gemessene Temperatur an eine Zentrale übermitteln. Das bilden von Datensätzen bestehend aus gemessener Temperatur, Messzeitpunkt, Position und Kennung des jeweiligen Funkthermometers ist nicht bekannt.

Abgesehen davon offenbart Katrin Meier: "Binker Materialschutz GmbH - Wärmeentwesung", 17. Juli 2015 (2015-07-17), XP093308074, allgemeine Informationen zur Wärmeentwesung und besagt, dass die Temperaturen aufgezeichnet werden und eine Messung der Temperatur in der Luft nicht ausreichend ist.

Ausgehend von der US 2005/246942 A1 oder der US 2007/084105 ist es daher Aufgabe der vorliegenden Erfindung einen Verfahren zur Heiß-Entwesung von lebensmitteltechnischen Anlagen und Geräten anzugeben, das einfacher, kostengünstiger und zuverlässiger ist. Weiter ist es Aufgabe der Erfindung eine entsprechende Anordnung zur Durchführung des Verfahrens anzugeben.

Die Lösung dieser Aufgaben erfolgt durch die Merkmale des Anspruchs 1, 2 bzw. 10.

Durch die Nutzung von Funkthermometern, die an den zu entwesenden Geräten und Anlagen in einem abgeschlossenen Volumen angeordnet werden, und einer Empfangs- und Steuereinrichtung erübrigt sich das aufwendige und umständliche manuelle Ablesen und protokollieren der Temperaturen. Durch die Funkthermometer ist auch keine umständliche Verkabelung notwendig und es werden die Temperaturen genau an den relevanten Stellen automatisch ermittelt, nämlich an und gegebenenfalls in den zu entwesenden Geräten und Anlagen und an Stellen in dem abgeschlossenen Volumen, an denen sich Ungeziefer vorzugsweise aufhält, wie z. B. Ritzen und Spalte in Wand und im Boden des abgeschlossenen Volumens. Da die zu entwesenden Anlagen und Geräte in dem abgeschlossenen Volumen in der Regel eine komplizierte Struktur mit abgedeckten und schwer zugänglichen Bereichen, Ritzen und Spalten in der Abgrenzung des abgeschlossenen Volumens aufweisen, werden in der Regel auch eine Mehrzahl von Funkthermometern eingesetzt. Mittels Heizgeräten wird das abgeschlossene Volumen mit darin angeordneten oder installierten zu entwesenden Anlagen und Geräten auf ein Temperaturfenster aufgeheizt und auf diesem Temperaturbereich für eine vorbestimmte Zeitdauer gehalten. Das Temperaturfenster ist durch eine untere und eine obere Temperaturschwelle definiert. Diese Temperaturschwellen bzw. das Temperaturfenster sind offenbarungsgemäß zusammen mit der vorbestimmten Aufrechterhaltungsdauer des Temperaturfensters so gewählt, dass einerseits aufgrund der unteren Temperaturschwelle und der Aufrechterhaltungsdauer sicher gewährleistet ist, dass das fragliche Ungeziefer abgetötet wird, und dass auch bei der oberen Temperaturschwelle über die Aufrechterhaltungsdauer eine temperaturbedingte Schädigung der zu entwesenden Geräte und Anlagen und auch der Räume und Gebäude mit den lebensmitteltechnischen Anlagen und Geräten ausgeschlossen ist. Zumindest während der vorbestimmten Aufrechterhaltungsdauer des Temperaturfensters nach Schritt c) wird die Temperatur durch die Funkthermometer wiederholt gemessen. Durch Zuordnung der gemessenen Temperaturwerte zu Messzeitpunkt mit Datum und Uhrzeit sowie der Kennung und der Position des jeweiligen Funkthermometers werden Datensätze gebildet. Diese Datensätze werden an die Empfangs- und Steuereinrichtung übermittelt und in dieser abgespeichert. Diese Datensätze lassen sich optional als Grafik oder als Tabelle - als Messprotokoll - ausdrucken und/oder abspeichern.

Dieses Messprotokoll liefert offenbarungsgemäß den Nachweis, dass man die zu entwesenden Geräte - und nicht nur die Luft um die Geräte herum - auf das durch amtliche Vorschriften geforderte Temperaturfenster aufgeheizt hat und dieses Temperaturfenster auch für die geforderte Zeitdauer aufrechterhalten hat. Durch die genaue Temperaturüberwachung mittels Funkthermometer und Empfangs- und Steuereinrichtung kann auch sicher verhindert werden, dass zu viel geheizt wird, so dass die Erfindung auch zur Energieeinsparung und Kostenreduzierung beiträgt.

Alternativ kann die Bildung der Datensätze auch in der Empfangs- und Steuereinheit erfolgen, d. h. die jeweiligen Funkthermometer übermitteln nur die gemessenen Temperaturen an die Empfangs- und Steuereinheit - Anspruch 2.

Die Temperaturmessung und Übermittlung erfolgt nach Anspruch 3 insbesondere während der Aufrechterhaltungsdauer nach Schritt c), sie kann aber auch schon vorher oder nachher erfolgen.

Nach Anspruch 4 erfolgt die Temperaturmessung und/oder die Übermittlung der Temperaturen oder Datensätze vorzugsweise kontinuierlich. Die kontinuierliche Überwachung der Temperatur und die zugehörige Bildung von Datensätzen ermöglicht eine lückenlose Dokumentation.

Offenbarungsgemäß erfolgt die Steuerung des oder der Heizgeräte auf der Basis der durch die Funkthermometer gemessenen Temperaturen. Die Empfangs- und Steuereinrichtung ist dabei mit dem wenigstens einen Heizgerät verbunden und dazu ausgelegt, das Heizgerät auf der Basis der von dem wenigstens einen Funkthermometer gemessenen Temperaturen und dem vorbestimmten Temperaturfenster zu steuern. Auf diese Weise wird sichergestellt, dass nicht nur die Luft in dem abgeschlossenen Volumen, sondern die zu entwesenden Geräte und Anlagen auf das gewünschte und nötige Temperaturfenster aufgeheizt werden.

Aus haftungstechnischen Aspekten, kann es alternativ auch sinnvoll sein, dass die Heizungsgeräte eine integrierte Temperaturregelung aufweisen. Diese Alternative ist nicht beansprucht.

Gemäß der vorteilhaften Ausgestaltung nach Anspruch 5 werden die Funkthermometer genutzt, um die Aufheizphase zu steuern. Wenn zum Beispiel die durch ein Funkthermometer gemessen Temperatur eines Geräts nur langsam oder unzureichend steigt, kann ein zusätzliches Heizgerät eingesetzt werden. Hierdurch kann die Aufheizphase beschleunigt und damit die gesamte Entwesung verkürzt werden.

Gemäß der vorteilhaften Ausgestaltung der Erfindung nach Anspruch 6, protokolliert die Empfangs- und Steuereinrichtung nicht nur die Temperaturen von Funkthermometern aus einem abgeschlossenen Volumen, sondern aus einer Mehrzahl von abgeschlossenen Volumina. Diese vereinfacht die Heiß-Entwesung bei lebensmitteltechnischen Anlagen und Geräten, die über eine Mehrzahl von Räumen verteilt sind.

Vorzugsweise sind die Funkthermometer und/oder die Heizgeräte und/oder die Empfangs- und Steuereinrichtung mobile Apparate. D. h. sie werden zum Zwecke der Heiß-Entwesung aufgebaut und positioniert und nach erfolgter Entwesung wieder abgebaut. Die Mobilität ermöglicht auch die Positionierung an allen relevanten Stellen. Damit ist es möglich die Anordnung zum Entwesen zu vermieten - Anspruch 7.

Als ISM-Bänder (Industrial, Scientific and Medical Band) werden Frequenzbereiche bezeichnet, die durch Hochfrequenz-Geräte in Industrie, Wissenschaft, Medizin, in häuslichen und ähnlichen Bereichen lizenzfrei und meist genehmigungsfrei genutzt werden können. Dazu gehören u.a. Frequenzbänder bei 433 MHz, 868 MHz, 2.4 GHz und 5 GHz.

Rechtlich anders gestellt, aber oft mit einem ISM-Band verwechselt ist das SRD-Band von 863 bis 870 MHz, das europaweit exklusiv für Funkkommunikation mit kurzer Reichweite reserviert worden ist. Für den internationalen Einsatz werden daher oft Geräte angeboten, die wahlweise auf 433 MHz (ISM-Band Region 1), 868 MHz (SRD-Band Europa) oder 915 MHz (ISM-Band Region 2) arbeiten.

Durch die gemeinsame Nutzung kann es in den besonders häufig genutzten Bändern, wie etwa dem 433-MHz- und dem 2.4-GHz-Band, leicht zu Störungen zwischen verschiedenen Geräten kommen. Daher wir hier die Nutzung des 868 MHz Bandes vorgeschlagen, da es dort durch einen eingeschränkten Tastgrad zu wenigen Störungen kommt. Gleichzeitig ist die Durchdringung von Gebäuden mit 868 MHz deutlich besser als mit 2.4 GHz oder 5 GHz. Das 868MHz-Frequenzband wird im Bereich Home-Automation und der IoT (Internet of Things) -Anwendung im LORA-WAN (Long Range Wide Area Network) genutzt. Dadurch sind die Komponenten zusätzlich sehr kostengünstig.

Aufgrund der geringen Störungsanfälligkeit und der hohen Durchdringung von Mauerwerk eignet sich für die Kommunikation zwischen den Funkthermometern und der Empfangs- und Steuereinrichtung insbesondere das 868MHz-Frequenzband im ISM-Band und das Frequenzband zwischen 863MHz - 870MHz im SRD-Band und im LORA-WAN - Anspruch 8, 9 und 11.

Die verschiedenen Funknetze haben alle Vor- und Nachteile. So ist bei dem ISM-Frequenzband die Abtastrate auf eine Übertragung pro Minute eingeschränkt. Allerdings sind die Funkthermometer durch IoT-Anwendungen sehr preisgünstig, so dass viele Funkthermometer eingesetzt werden können, was die Qualität der Heißentwesung verbessert.

Durch den Einsatz einer Vielzahl von Funkthermometern lässt sich die Temperaturverteilung in dem zu entwesenden Volumen grafisch darstellen und überwachen. Bei Überschreiten des voreingestellten Temperaturfensters durch eines der Funkthermometer lassen sich optische und/oder akustische Warnsignale ausgeben.

Um die Reichweite zu erhöhen und um die Kommunikation zwischen der Empfangs- und Steuereinrichtung und den einzelnen Funkthermometern zu verbessern werden Signalverstärker zwischengeschaltet, d. h. es werden ein oder mehrere Gateways, Repeater eingesetzt - Anspruch 12.

Gemäß einer vorteilhaften Ausgestaltung nach Anspruch 13 sind der Empfangs- und Steuereinrichtung und den einzelnen Funkthermometern zur Nutzung vorhandener Funknetze ausgelegt, wodurch die Reichweite erhöht und die Kommunikation zwischen der Empfangs- und Steuereinrichtung und den einzelnen Funkthermometern verbessert wird.

Bei der Anordnung zur Durchführung des Heiß-Entwesungs-Verfahrens nach Anspruch 10 können die mobilen Funkthermometer nur für die Zeitdauer der Entwesung an den zu entwesenden Geräten und Anlagen angeordnet und danach wieder entfernt werden. Wenn die wiederholte Montage und Demontage zu aufwendig ist, kann das mobile Funkthermometer auch stationär bleiben und auch zur Temperaturüberwachung des jeweiligen Geräts im normalen Betrieb dienen.

Die vorliegende Erfindung ist insbesondere auf die Heiß-Entwesung von lebensmitteltechnischen Anlagen und Geräten gerichtet, sie ist jedoch auch für das Abtöten von Schädlingen in Räumen, Anlagen und Geräten mit hohen Anforderungen an die Hygiene geeignet.

Weitere Einzelheiten, Merkmale und Vorteile der Erfindung ergeben sich aus der nachfolgenden Beschreibung bevorzugter Ausführungsformen der Erfindung.

### Kurzbeschreibung der Figuren

- Fig. 1: zeigt schematisch eine erste Ausführungsform der Erfindung;
- Fig. 2: zeigt schematisch eine zweite Ausführungsform der Erfindung;
- Fig. 3: zeigt schematisch eine dritte Ausführungsform der Erfindung; und
- Fig. 4: zeigt schematisch eine vierte Ausführungsform der Erfindung.

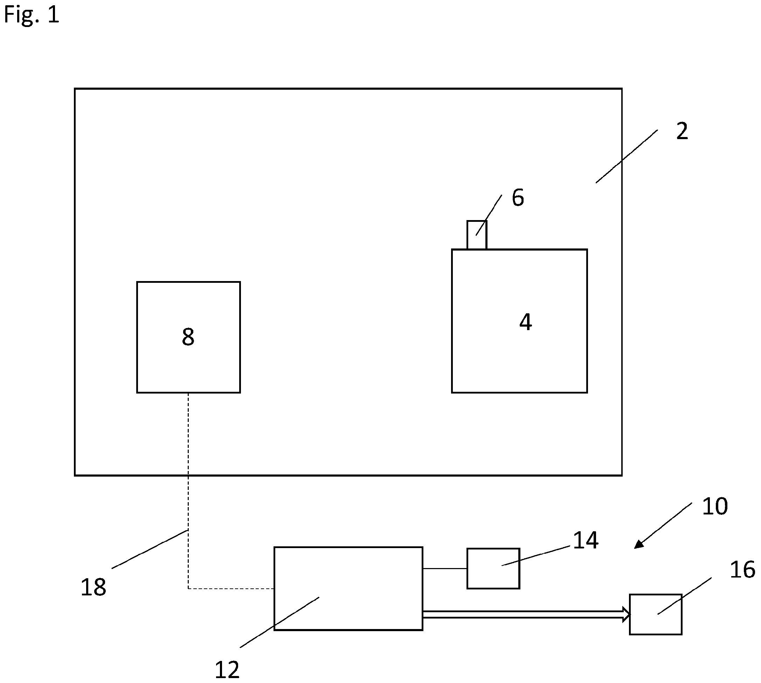

Die Fig. 1 zeigt die schematische Darstellung einer ersten Ausführungsform, bei der in einem abgeschlossenen Volumen 2 ein zu entwesendes Gerät 4, z. B. in Form einer Getreidemühle, ein mobiles Funkthermometer 6, das an dem zu entwesenden Gerät 4 angeordnet ist, und ein mobiles Heizgerät 8. Außerhalb des abgeschlossenen Volumens 2 ist eine mobile Empfangs- und Steuereinrichtung 10 angeordnet. Die Empfangs- und Steuereinrichtung 10 umfasst eine Steuereinheit 12, eine Empfangseinheit 14 und eine Ausgabeeinheit 16. Die Empfangseinheit 14 und die Ausgabeeinheit 16 sind mit der Steuereinheit 12 verbunden. Wenn die untere Schwellentemperatur Tᵤ erreicht ist, wird das Heizgerät 8 so geregelt, dass die durch das Funkthermometer 6 ermittelte Temperatur im Bereich zwischen der unteren und oberen Schwellentemperatur Tᵤ, Tₒ also in dem festgelegten Temperaturfenster liegt. Für eine vorbestimmte Zeitdauer, z. b. mehrere Tage, wird dieses Temperaturfenster aufrechterhalten. Während dieser Aufrechterhaltungsdauer misst das mobile Funkthermometer 6 kontinuierlich die Temperatur und bildet durch Zuordnung von Messzeitpunkt mit Datum und Uhrzeit, der Kennung und der Position des jeweiligen Funkthermometers zu den gemessenen Temperaturen Datensätze. Diese Datensätze werden an die Empfangs- und Steuereinrichtung 10 übermittelt, aufbereitet und zwischengespeichert. Diese Datensätze lassen sich als Grafik oder als Tabelle - als Messprotokoll - ausdrucken und/oder abspeichern. Diese Messprotokolle dienen als Nachweis, dass man die zu entwesenden Geräte - und nicht nur die Luft um die Geräte herum - auf das durch amtliche Vorschriften geforderte Temperaturfenster aufgeheizt hat und dieses Temperaturfenster auch für die geforderte Zeitdauer aufrechterhalten hat.

Die gestrichelte Verbindung 18 zwischen der Steuereinheit 12 und dem mobilen Heizgerät 8 deutet an, dass die Temperatursteuerung des Heizgeräts 8 auf der Basis der durch das Funkthermometer 6 ermittelten Temperaturen erfolgen kann. Die Steuereinheit 12 regelt damit die Heiztemperatur des Heizgerätes 8 derart, dass die durch das jeweilige Funkthermometer 6-i gemessenen Temperaturen innerhalb des geforderten Temperaturfensters liegen. Aus haftungstechnischen Gründen kann es auch sein, dass die Temperaturregelung nicht auf der Basis der durch die Funkthermometer 6-i gemessenen Temperaturen geregelt werden.

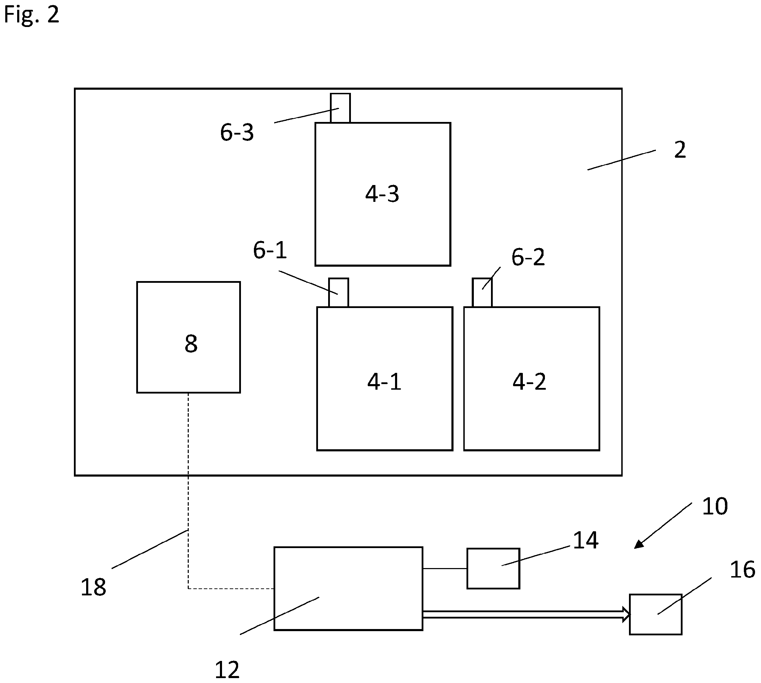

Fig. 2 zeigt eine zweite Ausführungsform der Erfindung, die sich von der ersten Ausführungsform der Erfindung lediglich dadurch unterscheidet, dass in dem geschlossenen Volumen 2 eine Mehrzahl von zu entwesenden Geräten 4-1, 4-2 und 4-3 angeordnet sind.

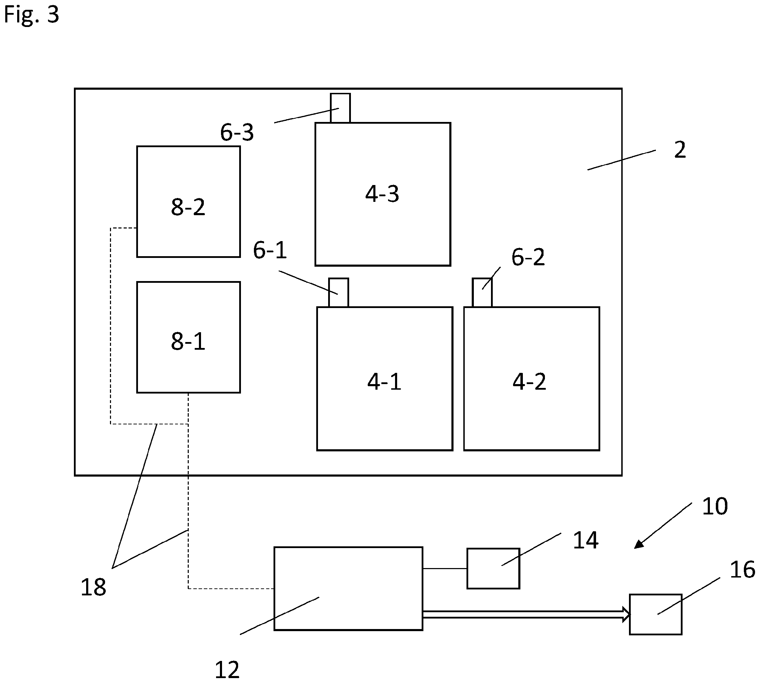

Fig. 3 zeigt eine dritte Ausführungsform der Erfindung, die sich der zweiten Ausführungsform lediglich dadurch unterscheidet, das eine Mehrzahl von mobilen Heizgeräten 8-1, 8-2 in dem geschlossenen Volumen 2 angeordnet sind.

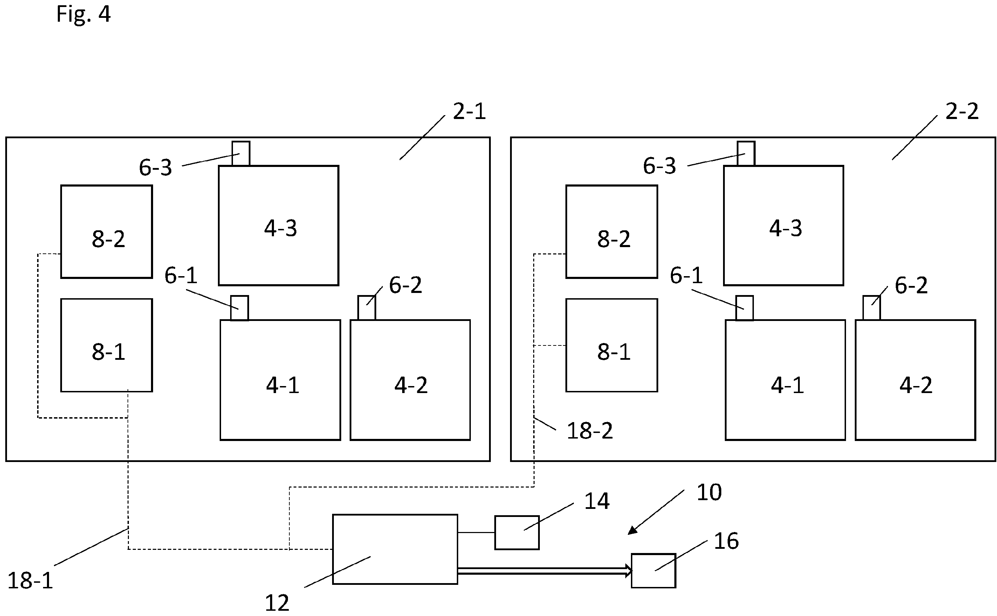

Fig. 4 zeigt eine vierte Ausführungsform der Erfindung mit zwei abgeschlossenen Volumina 2-1 und 2-1 in denen jeweils zwei Heizgeräte 8-1, 8-2, drei Geräte 4-1, 4-2, 4-3 und drei zugeordnete Funkthermometer 6-1, 6-2, 6-3 angeordnet sind. Bei dieser vierten Ausführungsform umfasst die Kennung für das jeweilige Funkthermometer 6-i und die Position des Funkthermometers 6-i jeweils auch die Identifizierung für das jeweilige geschlossene Volumen 2-i.

### Bezugszeichenliste:

- 2, 2-i: abgeschlossenes Volumen
- 4, 4-i: zu entwesendes Gerät oder Anlage
- 6, 6-i: mobile Funkthermometer
- 8, 8-i: mobiles Heizgerät
- 10: Empfangs- und Steuereinrichtung
- 12: Steuereinheit von 10
- 14: Empfangseinheit von 10
- 16: Ausgabeeinheit von 10
- 18: gestrichelte Verbindung zwischen 12 und 8

## Patentansprüche

1. Verfahren zur Heiß-Entwesung von lebensmitteltechnischen Geräten und Anlagen (4) in einem abgeschlossenen Volumen (2), mit den Verfahrensschritten:
a) Anordnen von wenigstens einem Funkthermometer (6) an einem lebensmitteltechnischen Gerät oder einer lebensmitteltechnischen Anlage (4) in dem abgeschlossenen Volumen;
b) Aufheizen des abgeschlossenen Volumens (2) mit wenigstens einem Heizgerät (8) auf ein vorbestimmtes Temperaturfenster, das durch eine untere Temperaturschwelle (Tᵤ) und eine obere Temperaturschwelle (Tₒ) definiert ist;
c) Aufrechterhalten der Temperatur in dem abgeschlossenen Volumen (2) in dem vorbestimmten Temperaturfenster über eine vorbestimmte Zeitdauer, wobei aufgrund der unteren Temperaturschwelle (Tᵤ) während der vorbestimmten Zeitdauer sicher gewährleistet ist, dass ein Ungeziefer abgetötet wird, und dass bei der oberen Temperaturschwelle (Tₒ) während der vorbestimmten Zeitdauer eine temperaturbedingte Schädigung des zu entwesenden Gerätes bzw. Anlage ausgeschlossen ist;
d) wiederholtes Messen der Temperatur durch das wenigstens eine Funkthermometer (6);
e) Bilden von Datensätzen in dem jeweiligen Funkthermometer (6-i) durch Zuordnen des Messzeitpunktes, der Position und der Kennung des jeweiligen Funkthermometers (6-i) zu den gemessenen Temperaturen;
f) Übermitteln der Datensätze von dem jeweiligen Funkthermometer (6-i) an eine Empfangs- und Steuereinrichtung (10) und Speichern der Datensätze in der Empfangs- und Steuereinrichtung (10), wobei die Empfangs- und Steuereinrichtung (10) mit dem wenigstens einen Heizgerät (8) verbunden ist und ausgelegt ist, das wenigstens eine Heizgerät (8) auf der Basis der von dem wenigstens einen Funkthermometer (6) gemessenen Temperaturen zu steuern;
g) Ausgabe der Datensätze durch die Empfangs- und Steuereinrichtung (10) als Messprotokoll als Nachweis darüber, dass das /die lebensmitteltechnische Gerät oder Anlage (4) auf das vorbestimmte Temperaturfenster aufgeheizt wurde und dieses Temperaturfenster auch für die vorbestimmte Zeitdauer aufrechterhalten wurde.

2. Verfahren zur Heiß-Entwesung von lebensmitteltechnischen Geräten und Anlagen (4) in einem abgeschlossenen Volumen (2), mit den Verfahrensschritten:
a) Anordnen von wenigstens einem Funkthermometer (6) an einem lebensmitteltechnischen Gerät oder einer lebensmitteltechnischen Anlage (4) in dem abgeschlossenen Volumen (2);
b) Aufheizen des abgeschlossenen Volumens (2) mit wenigstens einem Heizgerät (8) auf ein vorbestimmtes Temperaturfenster, das durch eine untere Temperaturschwelle (Tᵤ) und eine obere Temperaturschwelle (Tₒ) definiert ist;
c) Aufrechterhalten der Temperatur in dem abgeschlossenen Volumen (2) in dem vorbestimmten Temperaturfenster über eine vorbestimmte Zeitdauer, wobei aufgrund der unteren Temperaturschwelle (Tᵤ) während der vorbestimmten Zeitdauer sicher gewährleistet ist, dass ein Ungeziefer abgetötet wird, und dass bei der oberen Temperaturschwelle (Tₒ) während der vorbestimmten Zeitdauer eine temperaturbedingte Schädigung des zu entwesenden Gerätes bzw. Anlage ausgeschlossen ist;
d) wiederholtes Messen der Temperatur durch das wenigstens eine Funkthermometer (6);
e) Übermitteln der von dem jeweiligen Funkthermometer (6-i) gemessenen Temperaturen an eine Empfangs- und Steuereinrichtung (10);
f) Bilden von Datensätzen durch Zuordnen des Messzeitpunktes, der Position und der Kennung des jeweiligen Funkthermometers (6-i) zu den gemessenen Temperaturen durch die Empfangs- und Steuereinrichtung (10) und Speichern der Datensätze in der Empfangs- und Steuereinrichtung (10), wobei die Empfangs- und Steuereinrichtung (10) mit dem wenigstens einen Heizgerät (8) verbunden ist und ausgelegt ist, das wenigstens eine Heizgerät (8) auf der Basis der von dem wenigstens einen Funkthermometer (6) gemessenen Temperaturen zu steuern;
g) Ausgabe der Datensätze durch die Empfangs- und Steuereinrichtung (10) als Messprotokoll als Nachweis darüber, dass das /die lebensmitteltechnische Gerät oder Anlage (4) auf das vorbestimmte Temperaturfenster aufgeheizt wurde und dieses Temperaturfenster auch für die vorbestimmte Zeitdauer aufrechterhalten wurde.

3. Verfahren nach Anspruch 1 oder 2, **dadurch gekennzeichnet, dass** die Verfahrensschritte d) bis f) zumindest während des Verfahrensschritts c) durchgeführt werden.

4. Verfahren nach einem der vorhergehenden Ansprüche, **dadurch gekennzeichnet, dass** die Verfahrensschritte d) und/oder e) und/oder f) kontinuierlich erfolgen.

5. Verfahren nach einem der vorhergehenden Ansprüche, **dadurch gekennzeichnet, dass** in der Aufheizphase nach Verfahrensschritt b) die durch das wenigstens eine Funkthermometer (6) gemessenen Temperaturen zur Steuerung der Aufheizphase genutzt werden.

6. Verfahren nach einem der vorhergehenden Ansprüche, **dadurch gekennzeichnet, dass** durch die Empfangs- und Steuereinrichtung (10) Temperaturen von Funkthermometern (8-i) aus einer Mehrzahl von abgeschlossenen Volumina (2-i) empfangen und verarbeitet werden.

7. Verfahren nach einem der vorhergehenden Ansprüche, **dadurch gekennzeichnet, dass** das wenigstens eine Funkthermometer (6) ein mobiles Funkthermometer ist und/oder dass das wenigstens eine Heizgerät (8) ein mobiles Heizgerät ist und/oder dass die Empfangs- und Steuereinheit (10) eine mobile Steuereinheit ist.

8. Verfahren nach einem der vorhergehenden Ansprüche, **dadurch gekennzeichnet, dass** zur Kommunikation zwischen den Funkthermometern und der Empfangs- und Steuereinrichtung (10) das ISM-Frequenzband, das SRD-Frequenzband und/oder LoRa-WAN eingesetzt wird.

9. Verfahren nach Anspruch 8, **dadurch gekennzeichnet, dass** zur Kommunikation zwischen den Funkthermometern und der Empfangs- und Steuereinrichtung (10) das Frequenzband zwischen 863MHz und 870MHz genutzt wird.

10. Anordnung zur Durchführung des Verfahrens nach Anspruch 1, mit wenigstens einem lebensmitteltechnischen Gerät oder einer lebensmitteltechnischen Anlage
wenigstens einem mobilen Heizgerät (8) zum Aufheizen eines geschlossenen Volumens (2) mit dem wenigstens einen lebensmitteltechnischen Gerät oder der wenigstens einen lebensmitteltechnischen Anlage (4),
wenigstens einem mobilen Funkthermometer (6-i), das an dem wenigstens einen lebensmitteltechnischen Gerät oder an der wenigstens einen lebensmitteltechnischen Anlage (4) positioniert ist, und das zur wiederholten Messung der Temperatur und der Bildung von Datensätzen ausgelegt ist, wobei die Datensätze durch Zuordnung der gemessenen Temperaturen zum Messzeitpunkt, der Position und der Kennung des jeweiligen Funkthermometers (6-i) gebildet sind;
einer mobilen Empfangs- und Steuereinrichtung (10) zum Protokollieren und Speichern der durch das wenigstens eine Funkthermometer übermittelten Datensätze, und
einer Ausgabeeinrichtung für die Datensätze als Messprotokoll als Nachweis darüber, dass das /die lebensmitteltechnische Gerät oder Anlage (4) auf das vorbestimmte Temperaturfenster aufgeheizt wurde und dieses Temperaturfenster auch für die vorbestimmte Zeitdauer aufrechterhalten wurde, wobei das mobile Heizgerät (8) das abgeschlossene Volumen (2) auf ein vorbestimmtes Temperaturfenster, das durch eine untere Temperaturschwelle (Tᵤ) und eine obere Temperaturschwelle (Tₒ) definiert ist, aufheizt und die Temperatur in dem abgeschlossenen Volumen (2) in dem vorbestimmten Temperaturfenster über eine vorbestimmte Zeitdauer aufrechterhält, wobei aufgrund der unteren Temperaturschwelle (Tᵤ) während der vorbestimmten Zeitdauer sicher gewährleistet ist, dass ein Ungeziefer abgetötet wird, und dass bei der oberen Temperaturschwelle (Tₒ) während der vorbestimmten Zeitdauer eine temperaturbedingte Schädigung des zu entwesenden Gerätes bzw. Anlage ausgeschlossen ist,
die Empfangs- und Steuereinrichtung (10) mit dem wenigstens einen Heizgerät (8) verbunden ist, und
die Empfangs- und Steuereinrichtung (10) ausgelegt ist, das Heizgerät (8) auf der Basis der von dem wenigstens einen Funkthermometer (6) gemessenen Temperaturen und dem vorbestimmten Temperaturfenster aus Verfahrensschritt b) zu steuern .

11. Anordnung nach Anspruch 10 44 , dass die Funkthermometer (6-i) und die Empfangs- und Steuereinrichtung (10) zur Nutzung des ISM-Frequenzbandes, des SRD-Frequenzbandes und/oder von LORA-WLAN ausgelegt sind.

12. Anordnung nach Anspruch 10 oder 11, **gekennzeichnet durch** ein oder mehrere Signalverstärker, die zur Verbesserung der Kommunikation zwischen der Empfangs- und Steuereinrichtung (10) und den einzelnen Funkthermometern (6-i) vorgesehen sind.

13. Anordnung nach Anspruch 11 oder 12, **dadurch gekennzeichnet, dass** die Empfangs- und Steuereinrichtung (10) und die einzelnen Funkthermometer (6-i) zur Nutzung vorhandener Funknetzwerke ausgelegt sind.

## Claims

1. A method for disinfestation by heat of food-processing appliances and installations (4) in a closed volume (2), having the method steps:
a) arranging at least one radio thermometer (6) on a food-processing appliance or a food-processing installation (4) in the closed volume;
b) heating the closed volume (2) with at least one heating appliance (8) to a predetermined temperature window which is defined by a lower temperature threshold (Tu) and an upper temperature threshold (To);
c) maintaining the temperature in the closed volume (2) in the predetermined temperature window over a predetermined period of time, wherein, on account of the lower temperature threshold (Tu) during the predetermined period of time, it is ensured with certainty that a pest is killed, and that, in the case of the upper temperature threshold (To) during the predetermined period of time, temperature-induced damage to the appliance or installation to be disinfested is ruled out;
d) repeatedly measuring the temperature by the at least one radio thermometer (6);
e) forming data records in the respective radio thermometer (6-i) by assigning the measurement time, the position and the identifier of the respective radio thermometer (6-i) to the measured temperatures;
f) transmitting the data records from the respective radio thermometer (6-i) to a receiving and control device (10) and storing the data records in the receiving and control device (10), wherein the receiving and control device (10) is connected to the at least one heating appliance (8) and is configured to control the at least one heating appliance (8) on the basis of the temperatures measured by the at least one radio thermometer (6);
g) outputting the data records by the receiving and control device (10) as a measurement protocol as proof that the food-processing appliance or installation (4) has been heated to the predetermined temperature window and that this temperature window has also been maintained for the predetermined period of time.

2. The method for disinfestation by heat of food-processing appliances and installations (4) in a closed volume (2), having the method steps:
a) arranging at least one radio thermometer (6) on a food-processing appliance or a food-processing installation (4) in the closed volume (2);
b) heating the closed volume (2) with at least one heating appliance (8) to a predetermined temperature window which is defined by a lower temperature threshold (Tu) and an upper temperature threshold (To);
c) maintaining the temperature in the closed volume (2) in the predetermined temperature window over a predetermined period of time, wherein, on account of the lower temperature threshold (Tu) during the predetermined period of time, it is ensured with certainty that a pest is killed, and that, in the case of the upper temperature threshold (To) during the predetermined period of time, temperature-induced damage to the appliance or installation to be disinfested is ruled out;
d) repeatedly measuring the temperature by the at least one radio thermometer (6);
e) transmitting the temperatures measured by the respective radio thermometer (6-i) to a receiving and control device (10);
f) forming data records by assigning the measurement time, the position and the identifier of the respective radio thermometer (6-i) to the measured temperatures by the receiving and control device (10) and storing the data records in the receiving and control device (10), wherein the receiving and control device (10) is connected to the at least one heating appliance (8) and is configured to control the at least one heating appliance (8) on the basis of the temperatures measured by the at least one radio thermometer (6);
g) outputting the data records by the receiving and control device (10) as a measurement protocol as proof that the food-processing appliance or installation (4) has been heated to the predetermined temperature window and that this temperature window has also been maintained for the predetermined period of time.

3. The method according to claim 1 or 2, **characterized in that** the method steps d) to f) are carried out at least during the method step c).

4. The method according to one of the preceding claims, **characterized in that** the method steps d) and/or e) and/or f) are carried out continuously.

5. The method according to one of the preceding claims, **characterized in that**, in the heating phase after method step b), the temperatures measured by the at least one radio thermometer (6) are used to control the heating phase.

6. The method according to one of the preceding claims, **characterized in that** temperatures of radio thermometers (8-i) from a plurality of closed volumes (2-i) are received and processed by the receiving and control device (10).

7. The method according to one of the preceding claims, **characterized in that** the at least one radio thermometer (6) is a mobile radio thermometer and/or **in that** the at least one heating appliance (8) is a mobile heating appliance and/or **in that** the receiving and control unit (10) is a mobile control unit.

8. The method according to one of the preceding claims, **characterized in that** the ISM frequency band, the SRD frequency band and/or LoRa-WAN is used for communication between the radio thermometers and the receiving and control device (10).

9. The method according to claim 8, **characterized in that** the frequency band between 863 MHz and 870 MHz is used for communication between the radio thermometers and the receiving and control device (10).

10. An arrangement for carrying out the method according to claim 1, comprising
at least one food-processing appliance or a food-processing installation,
at least one mobile heating appliance (8) for heating a closed volume (2) with the at least one food-processing appliance or the at least one food-processing installation (4),
at least one mobile radio thermometer (6-i) which is positioned on the at least one food-processing appliance or on the at least one food-processing installation (4) and which is configured for repeatedly measuring the temperature and forming data records, wherein the data records are formed by assigning the measured temperatures to the measurement time, the position and the identifier of the respective radio thermometer (6-i);
a mobile receiving and control device (10) for logging and storing the data records transmitted by the at least one radio thermometer, and
an output device for the data records as a measurement protocol as proof that the food-processing appliance or installation (4) has been heated to the predetermined temperature window and that this temperature window has also been maintained for the predetermined period of time, wherein the mobile heating appliance (8) heats the closed volume (2) to a predetermined temperature window which is defined by a lower temperature threshold (Tu) and an upper temperature threshold (To) and maintains the temperature in the closed volume (2) in the predetermined temperature window over a predetermined period of time, wherein, on account of the lower temperature threshold (Tu) during the predetermined period of time, it is ensured with certainty that a pest is killed, and that, in the case of the upper temperature threshold (To) during the predetermined period of time, temperature-induced damage to the appliance or installation to be disinfested is ruled out,
the receiving and control device (10) is connected to the at least one heating appliance (8), and
the receiving and control device (10) is configured to control the heating appliance (8) on the basis of the temperatures measured by the at least one radio thermometer (6) and the predetermined temperature window from method step b).

11. The arrangement according to claim 10, **characterized in that** the radio thermometers (6-i) and the receiving and control device (10) are configured for using the ISM frequency band, the SRD frequency band and/or LORA-WLAN.

12. The arrangement according to claim 10 or 11, **characterized by** one or more signal amplifiers which are provided for improving the communication between the receiving and control device (10) and the individual radio thermometers (6-i).

13. The arrangement according to claim 11 or 12, **characterized in that** the receiving and control device (10) and the individual radio thermometers (6-i) are configured for using existing radio networks.

## Revendications

1. Procédé de désinfection à chaud d'appareils et d'installations (4) associés à des aliments dans un volume (2) fermé, avec les étapes de procédé suivantes :
a) agencement d'au moins un thermomètre radio (6) au niveau d'un appareil associé à des aliments ou d'une installation (4) associée à des aliments dans le volume fermé ;
b) chauffage du volume (2) fermé avec au moins un appareil de chauffage (8) à une fenêtre de température prédéterminée qui est définie par un seuil de température inférieur (Tᵤ) et un seuil de température supérieur (Tₒ) ;
c) maintien de la température dans le volume (2) fermé dans la fenêtre de température prédéterminée sur une durée prédéterminée, dans lequel il est garanti de manière sûre qu'un parasite est tué en raison du seuil de température inférieur (Tᵤ) pendant la durée prédéterminée et qu'un endommagement dû à la température de l'appareil ou de l'installation à désinfecter est exclu pour le seuil de température supérieur (To) pendant la durée prédéterminée ;
d) mesure répétée de la température par l'au moins un thermomètre radio (6) ;
e) formation de jeux de données dans le thermomètre radio (6-i) respectif par association du moment de mesure, de la position et de l'identifiant du thermomètre radio (6-i) respectif aux températures mesurées ;
f) transmission des jeux de données du thermomètre radio (6-i) respectif à un dispositif de réception et de commande (10) et enregistrement des jeux de données dans le dispositif de réception et de commande (10), dans lequel le dispositif de réception et de commande (10) est relié à l'au moins un appareil de chauffage (8) et est configuré afin de commander l'au moins un appareil de chauffage (8) sur la base des températures mesurées par l'au moins un thermomètre radio (6) ;
g) l'émission des jeux de données par le dispositif de réception et de commande (10) comme protocole de mesure en guise de preuve que l'appareil ou l'installation (4) associée à des aliments a été chauffé à la fenêtre de température prédéterminée et que cette fenêtre de température a aussi été maintenue pour la durée prédéterminée.

2. Procédé de désinfection à chaud d'appareils et d'installations (4) associés à des aliments dans un volume (2) fermé, avec les étapes de procédé suivantes :
a) agencement d'au moins un thermomètre radio (6) au niveau d'un appareil associé à des aliments ou d'une installation (4) associée à des aliments dans le volume fermé (2) ;
b) chauffage du volume (2) fermé avec au moins un appareil de chauffage (8) à une fenêtre de température prédéterminée qui est définie par un seuil de température inférieur (Tᵤ) et un seuil de température supérieur (Tₒ) ;
c) maintien de la température dans le volume (2) fermé dans la fenêtre de température prédéterminée sur une durée prédéterminée, dans lequel il est garanti de manière sûre qu'un parasite est tué en raison du seuil de température inférieur (Tᵤ) pendant la durée prédéterminée et qu'un endommagement dû à la température de l'appareil ou de l'installation à désinfecter est exclu pour le seuil de température supérieur (Tₒ) pendant la durée prédéterminée ;
d) mesure répétée de la température par l'au moins un thermomètre radio (6) ;
e) transmission des températures mesurées par le thermomètre radio (6-i) respectif à un dispositif de réception et de commande (10) ;
f) formation de jeux de données par association du moment de mesure, de la position et de l'identifiant du thermomètre radio (6-i) respectif aux températures mesurées par le dispositif de réception et de commande (10) et enregistrement des jeux de données dans le dispositif de réception et de commande (10), dans lequel le dispositif de réception et de commande (10) est relié à l'au moins un appareil de chauffage (8) et est configuré afin de commander l'au moins un appareil de chauffage (8) sur la base des températures mesurées par l'au moins un thermomètre radio (6) ;
g) l'émission des jeux de données par le dispositif de réception et de commande (10) comme protocole de mesure en guise de preuve que l'appareil ou l'installation (4) associée à des aliments a été chauffé à la fenêtre de température prédéterminée et que cette fenêtre de température a aussi été maintenue pour la durée prédéterminée.

3. Procédé selon la revendication 1 ou 2, **caractérisé en ce que** les étapes de procédé d) à f) sont mises en œuvre au moins pendant l'étape de procédé c).

4. Procédé selon l'une quelconque des revendications précédentes, **caractérisé en ce que** les étapes de procédé d) et/ou e) et/ou f) sont mises en œuvre en continu.

5. Procédé selon l'une quelconque des revendications précédentes, **caractérisé en ce que** dans la phase de chauffage après l'étape de procédé b), les températures mesurées par l'au moins un thermomètre radio (6) sont utilisées pour la commande de la phase de chauffage.

6. Procédé selon l'une quelconque des revendications précédentes, **caractérisé en ce que** des températures de thermomètres radio (8-i) d'une majorité de volumes (2-i) fermés sont reçues et traitées par le dispositif de réception et de commande (10).

7. Procédé selon l'une quelconque des revendications précédentes, **caractérisé en ce que** l'au moins un thermomètre radio (6) est un thermomètre radio mobile et/ou **en ce que** l'au moins un appareil de chauffage (8) est un appareil de chauffage mobile et/ou **en ce que** le dispositif de réception et de commande (10) est un dispositif de commande mobile.

8. Procédé selon l'une quelconque des revendications précédentes, **caractérisé en ce que** la bande de fréquence ISM, la bande de fréquence SRD et/ou le LoRa-WLAN est utilisée pour la communication entre les thermomètres radio et le dispositif de réception et de commande (10).

9. Procédé selon la revendication 8, **caractérisé en ce que** la bande de fréquence entre 863 MHz et 870 MHz est utilisée pour la communication entre les thermomètres radio et le dispositif de réception et de commande (10).

10. Ensemble destiné à la mise en œuvre du procédé selon la revendication 1, avec au moins un appareil associé à des aliments ou une installation associée à des aliments, au moins un appareil de chauffage (8) mobile pour le chauffage d'un volume (2) fermé avec l'au moins un appareil associé à des aliments ou l'au moins une installation associée à des aliments (4),
au moins un thermomètre radio (6-i) mobile qui est positionné au niveau de l'au moins un appareil associé à des aliments ou au niveau de l'au moins une installation (4) associée à des aliments, et qui est configuré pour la mesure répétée de la température et la formation de jeux de données, dans lequel les jeux de données sont formés par association des températures mesurées au moment de mesure, de la position et de l'identifiant du thermomètre radio (6-i) respectif ;
un dispositif de réception et de commande (10) mobile pour la consignation et l'enregistrement des jeux de données transmis par l'au moins un thermomètre radio, et un dispositif d'émission pour les jeux de données comme protocole de mesure en guise de preuve que l'appareil ou l'installation (4) associée à des aliments a été chauffé à la fenêtre de température prédéterminée et que cette fenêtre de température a aussi été maintenue pour la durée prédéterminée, dans lequel l'appareil de chauffage (8) mobile chauffe le volume (2) fermé à une fenêtre de température prédéterminée qui est définie par un seuil de température inférieur (Tᵤ) et un seuil de température supérieur (Tₒ) et maintient la température dans le volume (2) fermé dans la fenêtre de température prédéterminée sur une durée prédéterminée, dans lequel il est garanti de manière sûre qu'un parasite est tué en raison du seuil de température inférieur (Tᵤ) pendant la durée prédéterminée et qu'un endommagement dû à la température de l'appareil ou l'installation à désinfecter est exclus pour le seuil de température supérieur (Tₒ) pendant la durée prédéterminée,
le dispositif de réception et de commande (10) est relié à l'au moins un appareil de chauffage (8) et
le dispositif de réception et de commande (10) est configuré afin de commander l'appareil de chauffage (8) sur la base des températures mesurées par l'au moins un thermomètre radio (6) et la fenêtre de température prédéterminée de l'étape de procédé b).

11. Ensemble selon la revendication 10, **caractérisé en ce que** le thermomètre radio (6-i) et le dispositif de réception et de commande (10) sont configurés pour l'utilisation de la bande de fréquence ISM, de la bande de fréquence SRD et/ou du LORA-WLAN.

12. Ensemble selon la revendication 10 ou 11, **caractérisé par** un ou plusieurs amplificateurs de signaux qui sont prévus pour l'amélioration de la communication entre le dispositif de réception et de commande (10) et les différents thermomètres radio (6-i).

13. Ensemble selon la revendication 11 ou 12, **caractérisé en ce que** le dispositif de réception et de commande (10) et les différents thermomètres radio (6-i) sont configurés pour l'utilisation de réseaux radio présents.
